(19) Europäisches Patentamt
European Patent Office
Office européen des brevets

(11) EP 4 092 064 A1

(12) EUROPEAN PATENT APPLICATION

(43) Date of publication:
**23.11.2022 Bulletin 2022/47**

(21) Application number: **21174109.5**

(22) Date of filing: **17.05.2021**

(51) International Patent Classification (IPC):
***C08G 18/44*** *(2006.01)* ***B29C 64/10*** *(2017.01)*
***C08G 18/48*** *(2006.01)* ***C08G 18/67*** *(2006.01)*
***C08G 18/73*** *(2006.01)* ***C08G 18/78*** *(2006.01)*
***C08G 18/79*** *(2006.01)*

(52) Cooperative Patent Classification (CPC):
**C08G 18/73; B33Y 70/00; C08G 18/44; C08G 18/4825; C08G 18/672; C08G 18/7831; C08G 18/7837; C08G 18/792;** B29C 64/124

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Davepon, Björn**
**Patentanwaltskanzlei Davepon**
**Schloss Dyck**
**41363 Jüchen (DE)**

(54) **PHOTO- AND THERMALLY CURABLE RESIN USEFUL FOR ADDITIVE MANUFACTURING**

(57) A resin comprises: A) a (meth)acrylate-functional compound; B) a polyisocyanate; C) a radical starter and D) a catalyst. The compound A) has an equivalent molecular weight with respect to (meth)acrylate C=C double bonds of ≥ 100 g/mol, the polyisocyanate B) has an average NCO group functionality of ≥ 2 and an equivalent molecular weight with respect to NCO groups of ≤ 300 g/mol, the catalyst D) is an isocyanate trimerization catalyst and the resin is free from NCO-reactive compounds or, if NCO-reactive compounds are present in the resin, the molar ratio of NCO groups to NCO-reactive groups is ≥ 5:1.

Such resins may form hybrid polymer networks.

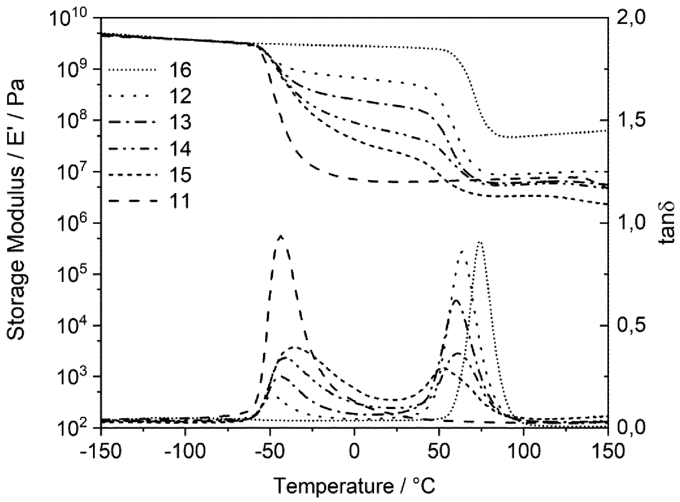


FIG. 1

EP 4 092 064 A1

## Description

The present invention relates to a resin comprising a (meth)acrylate-functional compound, a polyisocyanate, a radical starter and a catalyst. The invention also relates to a method of curing such a resin, cured resins and articles of manufacture.

The use of additive manufacturing build materials which are solely based on acrylates usually result in brittle material properties, which is undesired when it comes to the production of functional materials. Decreasing the amount of acrylates in the resin system is thus highly desired.

US 2009/062500 A1 relates to a process for preparing low-viscosity reaction products of polyisocyanates containing activated, ethylenically unsaturated groups which react, with polymerization, on exposure to actinic radiation. In particular, a process for preparing radiation-curing allophanates having a residual monomer content of less than 0.5% by weight and an NCO content of less than 1% by weight, the process comprising: 1) preparing NCO-group-containing urethanes having radiation-curing groups by reacting: A) one or more compounds containing isocyanate groups, B) a mixture containing at least 90 mol % of hydroxyethyl acrylate and hydroxypropyl acrylate, in which 10-45 mol %, of hydroxyethyl acrylate is included, C) optionally further, non-radiation-curing compounds containing NCO-reactive groups D) optionally in the presence of a catalyst; and 2) reacting the NCO-group-containing urethanes simultaneously or subsequently, without further addition of compounds containing isocyanate groups, in the presence of: E) an allophanatization catalyst and, F) optionally, a tertiary amine; the ratio of NCO groups of the compounds from A) to the OH groups of the compounds from B) and, where used, C) being 1.45:1.0 to 1.1:1.0.

US 2018/133953 A1 discloses a process for producing an object from a precursor which comprises the steps of: depositing a free-radically crosslinked resin atop a carrier to obtain a layer of a construction material joined to the carrier which corresponds to a first selected cross section of the precursor; depositing a free-radically crosslinked resin atop a previously applied layer of the construction material to obtain a further layer of the construction material which corresponds to a further selected cross section of the precursor and which is joined to the previously applied layer; repeating step II) until the precursor is formed; wherein the depositing of a free-radically crosslinked resin at least in step II) is effected by exposure and/or irradiation of a selected region of a free-radically crosslinkable resin corresponding to the respectively selected cross section of the object and wherein the free-radically crosslinkable resin has a viscosity (23° C, DIN EN ISO 2884-1) of ≥ 5 mPas to ≤ 100000 mPas. In the process the free-radically crosslinkable resin comprises a curable component in which NCO groups and olefinic C=C double bonds are present, wherein in the curable component the molar ratio of NCO groups to olefinic C=C double bonds is in a range from ≥1:5 to ≤ 5:1.

WO 2018/104223 A1 discloses a process for producing an object from a precursor, comprising the steps of: I) depositing a free-radically crosslinked resin atop a carrier to obtain a layer of a construction material joined to the carrier which corresponds to a first selected cross section of the precursor; II) depositing a free-radically crosslinked resin atop a previously applied layer of the construction material to obtain a further layer of the construction material which corresponds to a further selected cross section of the precursor and which is joined to the previously applied layer; III) repeating step II) until the precursor is formed. The depositing of a free-radically crosslinked resin at least in step II) is effected by introducing energy to a selected region of a free-radically crosslinkable resin corresponding to the respectively selected cross section of the object. The free-radically crosslinkable resin has a viscosity (23°C, DIN EN ISO 2884-1) of ≥ 5 mPas to ≤ 100 000 mPas. The free-radically crosslinkable resin comprises a curable component comprising NCO groups blocked with a blocking agent, compounds having at least two Zerewitinoff-active H atoms and olefinic C=C double bonds, wherein the blocking agent is an isocyanate or the blocking agent is selected such that deblocking of the NCO group is not followed by liberation of the blocking agent as a free molecule or as a part of other molecules or moieties. Step III) is followed by a further step IV): treating the precursor obtained after step III) under conditions sufficient for at least partially deblocking NCO groups present in the free-radically crosslinked resin of the obtained precursor and reacting the thus obtained functional groups with compounds having at least two Zerewitinoff-active H atoms to obtain the object.

US 2020/0140707 A1 relates to a method for producing an object in an additive manufacturing process from a precursor and comprises the following steps: I) depositing a layer of a radically cross-linkable construction material, which corresponds to a first selected cross-section of the precursor, on a carrier; II) depositing a layer of a radically cross-linkable construction material, which corresponds to a further selected cross-section of the precursor, on a previously applied layer of the radically cross-linked construction material; III) repeating step II) until the precursor is formed. The radically cross-linkable construction material comprises a thermoplastic radically cross-linkable polyurethane with a urethane group content of ≥ 5% by weight and a photoinitiator. The radically cross-linkable construction material is also heated to a processing temperature that is greater than the melting point of the radically cross-linkable polyurethane. After step III) the precursor having a temperature of 20° C. is defined as the object, or step IV) is performed: IV) performing a chemical reaction in the precursor obtained after step III) so that the object is obtained.

The present invention has the object of providing a resin that can be used in an additive manufacturing process with reduced shrinkage compared to pure acrylate resins to ultimately provide toughness-enhanced radiation-curable

materials for an article of manufacture.

This object is achieved by a resin according to claim 1. A method of curing such a resin is the subject of claim 8. Cured resins and articles of manufacture are the subject of claims 13, 14 and 15, respectively. Preferred embodiments are the subject of the dependent claims. They may be combined freely unless the context clearly indicates otherwise.

Accordingly, the resin comprises: A) a (meth)acrylate-functional compound; B) a polyisocyanate; C) a radical starter and D) a catalyst. The compound A) has an equivalent molecular weight with respect to (meth)acrylate C=C double bonds of ≥ 100 g/mol. The polyisocyanate B) has an average NCO group functionality of ≥ 2 and an equivalent molecular weight with respect to NCO groups of ≤ 300 g/mol. The catalyst D) is an isocyanate trimerization catalyst and the resin is free from NCO-reactive compounds or, if NCO-reactive compounds are present in the resin, the molar ratio of NCO groups to NCO-reactive groups is ≥ 5:1.

Such resins have two curing pathways: a radiation-curing of (meth)acrylate groups and a thermally induced trimerization, in particular leading to isocyanurate formation, of NCO groups. Without wishing to be bound by theory it is assumed that after both curing pathways have been taken, interpenetrating networks have been at least partially formed where one network is derived from radiation-cured compound A) and the other network is derived from trimerized polyisocyanate B).

Dual cure thermosets combine two polymerization processes that either take place simultaneously or sequentially triggered by a similar or different stimuli, such as temperature or UV light.

The versatility of such dual polymer networks lies in the synergistic behavior of the two different polymers with regard to their mechanical properties.

In case of combining an elastomer with a plastic, either a reinforced rubber or an impact-resistant plastic is formed, depending on which of the two polymer phases predominates. Prominent examples of dual-cure polymer networks are combinations of polyurethane and poly(methylmethacrylate) polymers that are used in numerous applications in various industries.

The radiation- and thermally cured resin according to the invention has two glass transition temperatures. A (meth)acrylic network in the dual polymer network can have a glass transition temperature of, for example, around -50 °C. This transition temperature may be tuned by the choice of any polyol in the compound A) as well as the molecular weight of A). The second glass transition temperature results from the NCO group trimer network and may, for example, be around 60 °C.

Between these two glass transition temperatures the decline of the storage modulus with rising temperature, relative to an initial value at a temperature below the lower glass transition temperature, can be decreased. This makes the dual-cured resin suitable for applications over a wider temperature range or "all-season" applications. Thus, the formation of a dual network has a toughening effect in comparison to a purely acrylic network. This is also revealed in tensile measurements. As can be seen in the experimental section, with increasing amount of polyisocyanurate the tensile strength and the Young's modulus increase while the elongation stays essentially constant.

A further advantage of the resin according to the invention is that the mechanical properties of the dual-cured material can be fine-tuned by varying the ratio of A) to B).

As the radiation-curable double bond density is fairly low in resins according to the invention, it is assumed that the shrinkage of "green bodies" or intermediate articles after irradiation can be kept to a minimum or suppressed entirely.

It is provided that the compound A) has an equivalent molecular weight with respect to (meth)acrylate C=C double bonds of ≥ 100 g/mol, preferably ≥ 500 g/mol. It is also preferred that this equivalent molecular weight is ≥ 100 g/mol to ≤ 4000 g/mol, more preferred ≥ 500 g/mol to ≤ 3000 g/mol and most preferred ≥ 750 g/mol to ≤ 2000 g/mol.

If the synthesis route for A) is known and the molecular weight does not follow an overly broad distribution then the equivalent molecular weight can simply be calculated by dividing the molecular weight by the average number of (meth)acrylate groups per molecule. In cases where this is not appropriate an indirect approach can be taken. This indirect approach is particularly suited for compounds A) that are obtained by reacting an NCO-terminal precursor with a hydroxyalkyl (meth)acrylate.

First, the NCO-terminal precursor is titrated, for example according to DIN EN ISO 14896, in order to determine the NCO content, expressed as weight-percentage based on the total weight of the precursor ("%NCO"). The equivalent molecular weight of the precursor with respect to NCO groups is calculated by dividing the product of the molecular weight of an NCO group (42 g/mol) and a factor of 100 by the %NCO value. Adding the molecular weight of the hydroxyalkyl (meth)acrylate to this number gives the equivalent molecular weight per double bond for A).

With respect to the functionality of compound A) it is preferred that A) has an average number of (meth)acrylate groups per molecule of ≥ 1.8 to ≤ 2.2, more preferred ≥ 2.0 to ≤ 2.1. The (meth)acrylate groups in compound A) are furthermore preferably terminal groups.

The polyisocyanate B) has an average NCO group functionality of ≥ 2. Preferred is an average number of NCO groups per molecule of ≥ 2 to ≤ 4. It is furthermore provided that polyisocyanate B) has an equivalent molecular weight with respect to NCO groups of ≤ 300 g/mol, preferably ≥ 100 g/mol to ≤ 300 g/mol and more preferred ≥ 170 g/mol to ≤ 220 g/mol.

In the case of well-defined polyisocyanates B) the equivalent molecular weight can simply be calculated by dividing the molecular weight by the average number of isocyanate groups per molecule. If this is not feasible then the sample can be titrated, for example according to DIN EN ISO 14896, in order to determine the NCO content, expressed as weight-percentage based on the total weight of the polyisocyanate ("%NCO"). The equivalent molecular weight of the polyisocyanate with respect to NCO groups is calculated by dividing the product of the molecular weight of an NCO group (42 g/mol) and a factor of 100 by the %NCO value.

Preferred viscosity ranges at 23 °C for the polyisocyanate B), determined according to DIN EN ISO 2884-1, are ≥ 100 mPa·s to ≤ 3000 mPa·s and more preferred ≥ 175 mPa·s to ≤ 2500 mPa·s.

Radical starter C) can be a thermal initiator and/or a photoinitiator. Examples for thermal initiators C) include azobisisobutyronitrile (AIBN), dibenzoyl peroxide (BPO), tert.-butyl hydroperoxide (TBHP), di-tert.-butyl peroxide (DTBP), cumyl peroxyneodecanoate, 2,2'-azobis(4-methoxy-2,4-dimethylvaleronitrile (V-70) and their mixtures.

Photoinitiators C) can be Norrish type I (cleavage), Norrish type II (abstraction) or cationic photoinitiators. Specific examples are Irgacur®500 (a mixture of benzophenone and (1-hydroxycyclohexyl)phenylketone), Irgacure®819 DW (phenylbis-(2, 4, 6-trimethylbenzoyl)phosphine oxide), Esacure® KIP EM (oligo-[2-hydroxy-2-methyl-1-[4-(1-methylvinyl)-phenyl]-propanones]) and Ivocerin® (bis(4-methoxybenzoyl)diethylgermanium). A preferred photoinitiator is 2-hydroxy-2-methylpropiophenone, commercially available as Omnirad® 1173. Another preferred photoinitiator system is a mixture commercially available as Omnirad® BL 750. Mixtures of the aforementioned photoinitiator compounds or systems may also be employed.

In the resin according to the invention the radical starter is generally employed in a concentration, based on the amount of employed curable component, of 0,01 to 6,0 wt%, preferably of 0,5 to 4,0 wt% and particularly preferably of 2,0 to 3,0 wt%.

Isocyanate trimerization catalysts D) are, in principle, all compounds which accelerate the addition of isocyanate groups to afford isocyanurate groups and thus crosslink the isocyanate-containing molecules present. Specific examples are potassium acetate, potassium acetate in combination with a crown ether, potassium acetate in combination with a polyethylene glycol, potassium acetate in combination with a polypropylene glycol, tin ethylhexanoate, , sodium phenoxide, potassium hydroxide, trioctyl phosphine and/or tributyltin oxide.

In the resin according to the invention the isocyanate trimerization catalyst can generally be employed in an amount, based on the polyisocyanate B), of 0,0005 to 5,0 wt%, preferably of 0,1 to 2,0 wt% and particularly preferably of 0,5 to 1 wt%.

Preferably the photoinitiator C) is selected from: α-hydroxyphenylketones, benzildimethylketal, 2,4,6-trimethylbenzoyldiphenyl-phosphine oxide and/or bis(4-methoxybenzoyl)diethylgermanium and the catalyst D) is selected from: potassium acetate, potassium acetate in combination with a crown ether, potassium acetate in combination with a polyethylene glycol, potassium acetate in combination with a polypropylene glycol, tin ethylhexanoate, , sodium phenoxide, potassium hydroxide, trioctyl phosphine and/or tributyltin oxide.

It is further provided that the resin is free from NCO-reactive compounds or, if NCO-reactive compounds are present in the resin, the molar ratio of NCO groups to NCO-reactive groups is ≥ 5:1. Such NCO-reactive compounds to be avoided include monoalcohols, polyols, monoamines and polyamines. The goal here should be to avoid the formation of a polyurethane or polyurea network as much as possible. "Free from" is to be understood as meaning that technically unavoidable traces are included, but no deliberate addition of such NCO-reactive compounds has taken place. If, for some reason, NCO-reactive compounds have to be present in the resin then the molar ratio of NCO groups to NCO reactive groups is preferably ≥ 10:1, more preferred ≥ 20:1 and most preferred ≥ 100:1.

If desired, the resin may also comprise a monofunctional (meth)acrylate. This serves as a reactive thinner.

In an embodiment of the resin the compound A) is a (meth)acrylate functional polyurethane compound. Such compounds A) can be obtained by reacting an NCO-terminated polyurethane compound with a hydroxy(meth)acrylate, thereby obtaining a compound with a polyurethane backbone and (meth)acrylate end groups. An alternative route is the reaction of an OH-terminated polyurethane with NCO-terminated (meth)acrylates such as isocyanatoethyl (meth) acrylate.

Preferably the compound A) has a structure according to the general formula [ACRYL]-[ISO]-[POLYOL]-[ISO]-[ACRYL] with [POLYOL] being a radical of a difunctional polyol starting material, [ISO] being a radical of an aliphatic diisocyanate starting material and [ACRYL] being a radical of a hydroxyalkyl(meth)acrylate starting material. Such compounds A) can be obtained by reacting a polymeric diol with a large molar excess of diisocyanate. For example, the molar ratio of NCO groups to OH groups can be 15:1 or greater. The resulting NCO-terminated compound is then reacted with a hydroxy(meth)acrylate.

Suitable diisocyanates are, for example, those having a molecular weight in the range from 140 to 400 g/mol and having aliphatically, cycloaliphatically, araliphatically and/or aromatically bonded isocyanate groups, for example 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI), 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimetbyl-1,1'-bi(cyclobexyl), 4,4'-diisocyanato-2,2',5,5'-tetramethyl-1,1'-bi(cyclohexyl), 1,8-diisocyanato-p-menthane, 1,3-diisocyanatoadamantane, 1,3-dimethyl-5,7-diisocyanatoadamantane, 1,3- and 1,4-bis(isocyanatomethyl)benzene (xylylene diisocyanate; XDI), 1,3- and 1,4-bis(1-isocyanato-1-methylethyl)benzene (TMXDI) and bis(4-(1-isocyanato-1-methylethyl)phenyl) carbonate, 2,4- and 2,6-diisocyanatotoluene (TDI), 2,4'- and 4,4'-diisocyanatodiphenylmethane (MDI), 1,5-diisocyanatonaphthalene and any desired mixtures of such diisocyanates. Preferred are the non-aromatic diisocyanates, in particular PDI and HDI.

Suitable polyols are preferably linear polyether polyols, polyester polyols, polyacrylate polyols, polyepoxide polyols or polycarbonate polyols. The molecular weight of the [POLYOL] radical can be 500 g/mol to 3000 g/mol, preferably 1000 g/mol to 2000 g/mol. Suitable hydroxyalkyl (meth)acrylates include alkoxyalkyl (meth)acrylates having 2 to 12 carbon atoms in the hydroxyalkyl radical. Preference is given to 2-hydroxyethyl acrylate (HEA), the mixture of isomers resulting from the addition of propylene oxide onto acrylic acid, or 4-hydroxybutyl acrylate, and the analogous methacrylates. Particularly preferred is 2-hydroxyethyl methacrylate (HEMA).

Preferred combinations are:

| | [POLYOL] | [ISO] | [ACRYL] |
|---|---|---|---|
| 1. | Difunctional poly(propylene glycol), 500 g/mol | PDI | HEA |
| 2. | Difunctional poly(propylene glycol), 1000 g/mol | PDI | HEA |
| 3. | Difunctional poly(propylene glycol), 2000 g/mol | PDI | HEA |
| 4. | Difunctional poly(propylene glycol), 500 g/mol | HDI | HEA |
| 5. | Difunctional poly(propylene glycol), 1000 g/mol | HDI | HEA |
| 6. | Difunctional poly(propylene glycol), 2000 g/mol | HDI | HEA |
| 7. | Difunctional polyethercarbonate diol, 500 g/mol | PDI | HEA |
| 8. | Difunctional polyethercarbonate diol, 1000 g/mol | PDI | HEA |
| 9. | Difunctional polyethercarbonate diol, 2000 g/mol | PDI | HEA |
| 10. | Difunctional polyethercarbonate diol, 500 g/mol | HDI | HEA |
| 11. | Difunctional polyethercarbonate diol, 1000 g/mol | HDI | HEA |
| 12. | Difunctional polyethercarbonate diol, 2000 g/mol | HDI | HEA |
| 13. | Difunctional poly(propylene glycol), 500 g/mol | PDI | HEMA |
| 14. | Difunctional poly(propylene glycol), 1000 g/mol | PDI | HEMA |
| 15. | Difunctional poly(propylene glycol), 2000 g/mol | PDI | HEMA |
| 16. | Difunctional poly(propylene glycol), 500 g/mol | HDI | HEMA |
| 17. | Difunctional poly(propylene glycol), 1000 g/mol | HDI | HEMA |
| 18. | Difunctional poly(propylene glycol), 2000 g/mol | HDI | HEMA |
| 19. | Difunctional polyethercarbonate diol, 500 g/mol | PDI | HEMA |
| 20. | Difunctional polyethercarbonate diol, 1000 g/mol | PDI | HEMA |
| 21. | Difunctional polyethercarbonate diol, 2000 g/mol | PDI | HEMA |
| 22. | Difunctional polyethercarbonate diol, 500 g/mol | HDI | HEMA |
| 23. | Difunctional polyethercarbonate diol, 1000 g/mol | HDI | HEMA |
| 24. | Difunctional polyethercarbonate diol, 2000 g/mol | HDI | HEMA |

A structural example for a preferred compound A) is given in the formula below:

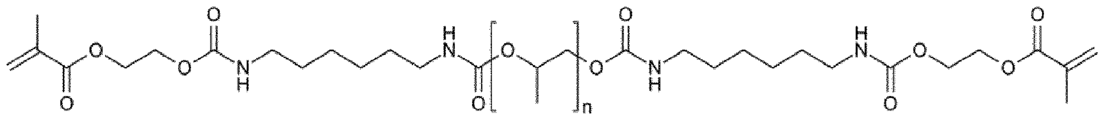

Here the [POLYOL] radical is a polypropylene glycol with n being, for example, in the range of 8 to 35.

In another embodiment of the resin the polyisocyanate B) comprises, in an amount of ≥ 30 weight-% based on the total weight of B), an allophanate, biuret, uretdione, isocyanurate, iminooxadiazinedione or a mixture of at least two of the aforementioned polyisocyanates. This amount is preferably ≥ 30 weight-% to ≤ 100 weight-% and more preferred ≥ 95 weight-% to ≤ 100 weight-%. A particularly preferred polyisocyanate B) is an allophanate having the following structure where o and p are, independently of each other, 4, 5 or 6 and where R is an alkyl rest having 1 to 6 carbon atoms:

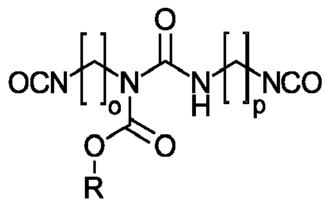

In another embodiment of the resin the radical starter C) is present in an amount of ≤ 3 weight-%, based on the total weight of the acrylic phase and the catalyst D) is present in an amount of ≤ 1 weight-%, based on the weight of the polyisocyanate B).

In another embodiment of the resin the compound A) and the polyisocyanate B) are present in a weight ratio between 2:1 and 1:3, based on the total weight of A) and B). Preferred are weight ratios of 1.5:1 to 1:1.5.

In another embodiment of the resin the isocyanate trimerization catalyst comprises tin(II)ethylhexanoate.

According to another aspect of the invention a method of curing a resin comprises: I) providing a resin; II) generating radicals from radical starters present in the resin, thereby obtaining a radically cured resin and III) heating the radically cured resin of step II), thereby obtaining a thermally cured resin. In step I) the resin is a resin according to the invention. In step II) the radicals initiate a reaction between (meth)acrylate groups in the resin. In step III) the radically cured resin is heated to a temperature of ≥ 50 °C, thereby initiating a trimerization reaction of isocyanate groups in the resin. Steps II) and III) can take place simultaneously or subsequently.

Details regarding the resin according to the invention have already been given in the preceding sections of the specification and will not be repeated here in the interest of brevity.

The method according to the invention reflects the dual-cure approach where irradiation of the resin, thermally or by radiation (for example with infrared, visible or ultraviolet light), solidifies the liquid or plastic starting material under formation of a (meth)acrylate polymer network and thermally curing builds the isocyanurate network which at least partially interpenetrates the (meth)acrylate network. Temperatures in step III) are preferably ≥ 50 °C to ≤ 150 °C and more preferred ≥ 90 °C to ≤ 110 °C. If a thermally induced radical curing of the resin is desired in step II), the temperatures in step II) are preferably ≥ 50 °C to ≤ 150 °C and more preferred ≥ 90 °C to ≤ 110 °C. In the event that a subsequent execution of step II) as a thermally induced radical curing step followed by step III) is desired the temperature of step II) is lower than the temperature of step III).

An embodiment of the method with photochemical curing in step II) comprises: I) providing a resin; II) irradiating the resin, thereby obtaining a photo-cured resin and III) heating the photo-cured resin of step II), thereby obtaining a thermally cured resin. In step I) the resin is a resin according to the invention with the radical starter C) being a photoinitiator. In step II) irradiating the resin initiates a reaction between (meth)acrylate groups in the resin and in step III) the photo-cured resin is heated to a temperature of ≥ 50 °C, thereby initiating a trimerization reaction of isocyanate groups in the resin.

In another embodiment of the method, in step I) the resin is provided as a coating on a substrate. The thermal curing step can then serve to harden shadow areas that have not been sufficiently irradiated with light.

In another embodiment of the method, in step II) the resin is selectively irradiated according to a pre-determined cross-section of a target article to be manufactured and the selective irradiation is repeated until a pre-determined intermediate article comprising the photo-cured resin is obtained and in step III) the intermediate article is heated to a temperature of ≥ 50 °C, thereby obtaining the target article. This embodiment encompasses additive manufacturing processes such as stereolithography (SLA) and DLP. As the thermal curing step III) can take place outside of the SLA or DLP system the space-time-yield of finished products with respect to available number of SLA or DLP machines can be increased.

In another embodiment of the method, prior to step II) the resin is selectively applied onto a surface according to a pre-determined cross-section of a target article to be manufactured and the selective application and irradiation according to step II) is repeated until a pre-determined intermediate article comprising the photo-cured resin is obtained and in step III) the intermediate article is heated to a temperature of ≥ 50 °C, thereby obtaining the target article. Selective application can take place via an inkjet printing process. The surface can be a powder surface. Then the method according to this embodiment resembles a binder jetting process. Alternatively, the process can be a so-called photopolymer jetting process. As the application of the resin is selective, the irradiation in step II) does not need to be selective. The irradiation of the entire build platform would then be sufficient.

In another embodiment of the method, step III) is performed at a temperature of ≥ 90 °C to ≤ 110 °C for a time of ≥ 6 hours to ≤ 7 hours.

Another aspect of the invention is a photo-cured resin obtainable or obtained after step II) of a method according to the invention.

Another aspect of the invention is a thermally cured resin obtainable or obtained after step III) of a method according to the invention. Preferably this resin has a first and a second glass transition temperature, determined as peak tan δ in a dynamic mechanical analysis according to ISO 6721 at 1 Hz oscillation frequency with a heating rate of 2 K/min and the first glass transition temperature is ≥ -60 °C to ≤ 20 °C and the second glass transition temperature is ≥ 50 °C to ≤ 120 °C. The difference $\Delta_{Tg}$ between the second and the first glass transition temperature is preferably 50 °C or more. It is furthermore preferred that the minimum value of the tan δ curve between the first and the second glass transition temperature is 0.2 or less. It is furthermore preferred that peak values of the first and the second glass transition temperatures have a ratio of ≥ 1:5 to ≤ 2:1.

Another aspect of the invention is an article of manufacture comprising a photo-cured resin according to the invention and/or a thermally cured resin according to the invention. Examples for such articles include medical devices, personalized medical articles, replicated medical implants, dental articles, sterilization containers and footwear components.

Examples

The present invention will be further described with reference to the following examples and figures without wishing to be limited by them.

Materials

Hexamethylene diisocyanate (HDI) sourced from Covestro Deutschland AG and used as received.

Pentamethylene diisocyanate (PDI) sourced from Covestro Deutschland AG and used as received.

Isocyanate ISO-1: low viscosity aliphatic polyisocyanate, allophanate based on hexamethylene diisocyanate. Isocyanate content approx. 20.0 % according to DIN EN ISO 14896, viscosity at 23 °C approx. 500 mPa·s according to DIN EN ISO 2884-1, isocyanate functionality approximately 2.5, monomeric HDI content ≤ 0.16 % according to DIN EN ISO 10283. The equivalent molecular weight with respect to NCO groups was 210 g/mol.

ISO-1 had the following structure:

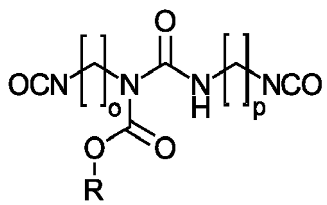

with o and p being 6 and R being $C_3$- and $C_4$-alkyl.

Isocyanate ISO-2: low-viscosity, aliphatic polyisocyanate resin, asymmetric trimer isocyanurate based on hexamethylene diisocyanate. Isocyanate content 23.5 ± 0.5 % according to DIN EN ISO 14896, viscosity at 23 °C, 730 ± 100 mPa·s according to DIN EN ISO 2884-1, monomeric HDI < 0.25 % according to DIN EN ISO 10283, isocyanate functionality approximately 3.2. The equivalent molecular weight with respect to NCO groups was 179 g/mol.

Isocyanate ISO-3: low viscosity aliphatic polyisocyanate, biuret based on hexamethylene diisocyanate. Isocyanate content 23.0 ± 0.5 % according to DIN EN ISO 14896, viscosity at 23 °C 2,500 ± 1,000 mPa·s according to DIN EN ISO 2884-1, isocyanate functionality approximately 3.5, Monomeric HDI ≤ 0.4 % according to DIN EN ISO 10283. The equivalent molecular weight with respect to NCO groups was 183 g/mol.

Isocyanate ISO-4: low viscosity aliphatic polyisocyanate, dimer of hexamethylene diisocyanate. Isocyanate

content 21.8 ± 0.5 % according to DIN EN ISO 14896, viscosity at 23 °C 175 ± 75 mPa·s according to DIN EN ISO 2884-1, isocyanate functionality approximately 2.5. The equivalent molecular weight with respect to NCO groups was 193 g/mol.

The photoinitiators Omnirad 1173 and Omnirad BL 750 were sourced from IGM Resins and were used as received.

The catalyst Desmorapid® SO (tin(II)ethylhexanoate) was used as received.

Hydroxyethylmethacrylate (HEMA) and cyclic trimethylolpropane formal acrylate (CTFA) were purchased from sigma Aldrich and were used as received.

The inhibitor 2,5-thiophenediylbis(5-tert-butyl-1,3-benzoxazole) was purchased from sigma Aldrich and was used as received.

The polyols used were:

| Polyol | Description |
|---|---|
| POL-1 | Difunctional poly(propylene glycol), 1000 g/mol |
| POL-2 | Difunctional polyethercarbonate diol, 1000 g/mol |
| POL-3 | Difunctional poly(propylene glycol), 2000 g/mol |

Methods

Gel permeation chromatography (GPC) was performed according to DIN 55672-1:2016-03, on 4 PSS SDV Analytical columns using an Agilent 1100 Series pump and an Agilent 1200 Series UV Detector (230 nm) with tetrahydrofuran as the elution solvent at 40 °C and 1 mL/min.

400 μm films were applied on a glass substrate using a doctor blade. The glass substrate was pretreated with a removal agent (Soy lecithin). The films were subsequently cured on a Superfici UV dryer, equipped with gallium- and mercury radiation sources with a total energy input of 1300 mJ/cm$^2$.

FTIR-spectra were measured on a Bruker FTIR Spectrometer Tensor II equipped with an ATR crystal.

Dynamic mechanical analysis of the cured films was performed on a Seiko SII Exstar 6100 DMS according to ISO 6721 with an oscillation frequency of 1 Hz. The experiments were carried out from -150 °C to 250 °C with a heating rate of 2 K/min. The glass transition temperature was determined by evaluation of the peak maximum in the loss factor curve tan δ.

Tensile tests were measured on a Zwick Retro with a 2 kN load cell, according to DIN EN ISO 527 at a test speed of 200 mm/min and a preload of 0.5 N. The E-modulus was determined between 0.05 % and 0.25 % elongation with a test speed of 1 mm/min.

The NCO content was determined by titration. About 2,0 g of sample without isocyanate groups (blank sample) were added to 5,0 mL of a 0,1 mol/L dibutyl amine solution in xylene followed by the addition of 50,0 mL of acetone and 3 drops of a phenol red solution (0,1 g in 80 g of a 20% ethanol in water mixture). This solution was then titrated with a 0,1 mol/L hydrochloric acid solution to the color change and the consumption was recorded. NCO group-containing samples were treated accordingly. The NCO content "%NCO" was calculated according to:

$$\%NCO = 4{,}2 * M * \frac{V_{blank} - V_{sample}}{m}$$

with M being the molarity of hydrochloric acid (e.g. 0,1 mol/L), m being the sample weight (g), $V_{blank}$ being the consumption of hydrochloric acid in the blank sample in mL and $V_{sample}$ being the consumption of hydrochloric acid in the sample in mL.

The equivalent weights (EW) of the polyisocyanates were determined by using the isocyanate content according to

$$EW = M\,(NCO) * 100\ /\ \%\,NCO$$

With M (NCO) = 42 g/mol.

The equivalent molecular weights per double bond (db) of the compounds were calculated using the measured isocyanate content before functionalization with HEMA. The molecular weight of hydroxyethylmethacrylate (HEMA) was then added subsequently following

$$EW\ per\ db = [(M\ (NCO) * 100) / (\%NCO)] + M\ (HEMA),$$

With M (HEMA) amounting to 130 g/mol.

The (meth)acrylate-functional polyurethanes were prepared according to literature with slight modifications (Driest, P. J.; Dijkstra, D. J.; Stamatialis, D.; Grijpma, D. W., The Trimerization of Isocyanate-Functionalized Compounds: An Effective Method for Synthesizing Well-Defined Polymer Networks. Macromolecular Rapid Communications 2019, 40 (9), 1800867).

Generally, HDI was heated to 100 °C under nitrogen atmosphere in a three-necked flask equipped with a stirrer, a condenser and a thermometer. 100 g of polymeric diol, buffered with 0.1 g dibutyl phosphate, were added dropwise to the HDI in a molar ratio of 15: 1 (NCO:OH). The reaction was allowed to take place for 3 h or until the desired isocyanate content was obtained, determined by titration. Subsequently, the product was transferred to a thin-film evaporator to remove excess HDI at 140 °C and reduced pressure (typically $10^{-2}$ mbar). The HDI monomer content was determined by GC.

In a last step, the isocyanate-functionalized compounds were transferred into a three-necked flask equipped with a stirrer, a condenser and a thermometer and were heated to 70 °C. Butylhydroxytoluene (250 ppm) was added to the compound as stabilizer. Hydroxyethylmethacrylate (HEMA) was added dropwise to the mixture and the reaction was allowed to take place until all isocyanate groups were converted, as determined by titration. The resulting methacrylate-functional polyurethanes were obtained as clear and viscous resins. Depending on the polymeric diols used, some products crystalized upon cooling.

Table 1 gives data of the methacrylate-functional polyurethanes ("AFPs") synthesized. The glass transition temperature was determined by DMA as peak tan $\delta$ after UV curing under gallium and mercury irradiation with a total energy input of 1300 $mJcm^{-2}$ of the respective methacrylate-functional polyurethane.

Table 1:

| Entry | Isocyanate | Polyol | Viscosity (23 °C) [mPas] | Glass transition [°C] | EW per double bond [g/mol] |
|---|---|---|---|---|---|
| AFP-1 | HDI | POL-1 | 9240 | -15 | 798 |
| AFP-2 | HDI | POL-2 | 55300 | -2 | 779 |
| AFP-3 | PDI | POL-2 | 50700 | 1.5 | 798 |
| AFP-4 | HDI | POL-3 | 6130 | -43 | 1262 |

Preparation of polymer samples: Polymer samples were prepared by mixing different amounts of an AFP with low viscous polyisocyanates, the photoinitiator as well as Sn(II)-ethylhexanoate as a trimerization catalyst. All samples were prepared by mixing the substances for two minutes using a Thinky Speedmixer. Subsequently, thin films were applied onto a glass substrate using a doctor blade with 400 $\mu$m gap. The glass was pretreated with soy lecithin solution to facilitate removal. For this purpose, the glass substrate was cleaned with ethylacetate and a thin layer of the soy lecithin solution (1,5 % in ethylacetate) was applied using a brush. These films were then cured under gallium and mercury irradiation with a total energy input of 1300 $mJcm^{-2}$.

For thermal post-curing, the films were placed into an oven for 6.5 h at 100 °C, or until all isocyanate groups were converted, as determined by FTIR-spectroscopy. Films containing high contents of polyisocyanate turned opaque upon thermal treatment.

Prints were performed on an ANYCUBIC PhotonS with a UV-LED light source of 405 nm. STL files were created using ANYCUBIC Photon slicer. The layer thickness was 100 $\mu$m and the printing parameters were chosen as listed in table 7. Every printing formulation additionally contains 0.1 wt% of an inhibitor molecule (2,5-thiophenediylbis(5-tert-butyl-1,3-benzoxazole) (BBOT).

Experimental results are summarized in the following tables 2 to 6.

Table 2 shows the results for the reaction time as a function of catalyst content. IR-measurements have been performed after 1 h, 3 h, 6,5 h and 22 h and the decrease in the NCO-signal at 2262 $cm^{-1}$ has been observed. It was found that a tin(II)ethylhexanoate concentration of 0,75 wt% and post-processing parameters of 100 °C for 6,5 h are ideally suited for the isocyanurate formation with regard to an efficient printing process and curing times.

Table 3 depicts the results of 4 different AFP's in a similar formulation. For all formulations, two glass transition temperatures evolve, thus indicating that a phase separated network has been formed upon the polymerization process. The first glass transition temperature originates from the acrylic soft phase, while the second glass transition temperature belongs to the isocyanurate network formed by the trimerization of the allophanate. The first glass transition temperature is dependent on the nature of the methacrylate-functional polyurethane, more precisely on the nature of the polyol.

Table 4 depicts the formulations 11-16 that contain different ratios of methacrylate functional polyurethane to

allophanate. Non-inventive examples are formulations 11 and 16, formulation 11 giving the pure acrylic network and formulation 16 giving the pure isocyanurate network.

Table 5 gives further examples that contain alternative low viscous polyisocyanates (17-25). That way it is possible to shift the second glass transition temperatures to higher temperatures, increasing the plateau of the storage modulus around room temperature.

Table 6 gives formulations 26-29 where CTFA (the glass transition temperature of pure polymerized material is 23 °C) as reactive thinner has been added to the formulation. That way it is possible to tune the first glass transition temperature of the network formed by the AFP and CTFA.

Table 7 shows formulation 20 3D printed on a standard DLP desktop printer and the corresponding printing parameters (Print 1).

In all tables the **comparative examples** are identified with an asterisk ("*").

Table 2

| # | **1*** | **2** | **3** | **4** | **5** | **6** |
|---|---|---|---|---|---|---|
| AFP-1 [g] | 3,5 | 3,5 | 3,5 | 3,5 | 3,5 | 3,5 |
| ISO-1 [g] | 6,25 | 6,25 | 6,25 | 6,25 | 6,25 | 6,25 |
| Omnirad 1173 [g] | 0,105 | 0,105 | 0,105 | 0,105 | 0,105 | 0,105 |
| Desmorapid SO [mg] | 0 | 31,25 | 46,875 | 62,5 | 93,75 | 125 |
| wt% catalyst | 0 | 0,5 | 0,75 | 1 | 1,5 | 2 |
| Post-Processing Temp. [°C] | 100 | 100 | 100 | 100 | 100 | 100 |
| NCO-content / % | 12,68 | 12,64 | 12,62 | 12,60 | 12,56 | 12,53 |
| NCO-content | | | | | | |
| IR-measurements after x hours | %NCO | %NCO | %NCO | %NCO | %NCO | %NCO |
| 1 h | 100,00 | 59,00 | 40,00 | 45,00 | 69,00 | 61,00 |
| 3 h | 96,00 | 17,00 | 13,00 | 1,00 | 1,00 | 2,00 |
| 6,5 h | 66,16 | 0,00 | 0,00 | 0,00 | 0,00 | 0,00 |
| 22 h | 0,26 | 0,00 | 0,00 | 0,00 | 0,00 | 0,00 |

Table 3

| # | **7** | **8** | **9** | **10** |
|---|---|---|---|---|
| AFP-1 [g] | 5 | | | |
| AFP-2 [g] | | 5 | | |
| AFP-3 [g] | | | 5 | |
| AFP-4 [g] | | | | 5 |
| ISO-1 [g] | 10 | 10 | 10 | 10 |
| Omnirad 1173 [g] | 0,15 | 0,15 | 0,15 | 0,15 |
| Desmorapid SO [g] | 0,075 | 0,075 | 0,075 | 0,075 |
| NCO-content [%] | 13,14 | 13,14 | 13,14 | 13,14 |
| First $T_g$ [°C] | -31 | 1 | 0,5 | -50 |
| Second $T_g$ [°C] | 61 | 62 | 60 | 64 |
| E-Modulus [N/mm$^2$] | 254 | 204 | 260 | 365 |
| Tensile Strength [N/mm$^2$] | 25 | 24 | 29 | 22 |
| Elongation [%] | 82 | 70 | 78 | 67 |

Table 4

| # | **11*** | **12** | **13** | **14** | **15** | **16*** |
|---|---|---|---|---|---|---|
| AFP-4 [g] | 10 | 5 | 5 | 7,5 | 10 | - |

(continued)

| # | 11* | 12 | 13 | 14 | 15 | 16* |
|---|---|---|---|---|---|---|
| ISO-1 [g] | - | 10 | 5 | 5 | 5 | 10 |
| Omnirad 1173 [g] | 0,3 | 0,15 | 0,15 | 0,225 | 0,3 | - |
| Desmorapid SO [g] | - | 0,075 | 0,0375 | 0,0375 | 0,0375 | 0,075 |
| NCO content [wt.-%] | n.a. | 13,14 | 9,82 | 7,84 | 6,52 | 19,85 |
| First $T_g$ [°C] | -43 | -50 | -43 | -40 | -35 | - |
| Second $T_g$ [°C] | - | 64 | 61 | 61 | 53 | 74 |
| E-Modulus [N/mm$^2$] | - | 365 | 95 | 25 | - | 1180 |
| Tensile Strength [N/mm$^2$] | 2,1 | 22 | 16 | 11 | 4,3 | 37 |
| Elongation at break [%] | 63 | 67 | 77 | 67 | 58 | 3,6 |

Storage modulus and tan delta curves for examples 11 to 16 are depicted in FIG. 1 and tensile strength curves are depicted in FIG. 2.

Comparative example 11 represents the pure soft phase present in dual polymer networks according to the invention as no polyisocyanates have been added. Accordingly, there is only one glass transition temperature at -43 °C present in the cured material. Likewise, comparative example 16 represents the pure hard phase with a glass transition temperature of 74 °C.

Examples 12 to 15 according to the invention investigate the influence of varying ratios of compound A) and polyisocyanate B). It can be seen that the storage modulus of the material can be kept within a certain range between the two glass transition temperatures.

The tensile strength curves of FIG. 2 show that with increasing amount of polyisocyanurate in the dual polymer networks the tensile strength and the Young's modulus increase while the elongation at break stays essentially constant. As the area under the respective curves corresponds to the energy dissipation in the tensile strength test it can also be seen that adding polyisocyanate B) increases the toughness of the dual-cured material.

FIG. 3 shows AFM measurements for examples 11 to 16. Examples according to the invention show a clearly phase-separated morphology with domains in the nanometer scale, where the acrylic compound is the soft and the trimerized isocyanate is the hard phase.

Table 5

| # | 17 | 18 | 19 | 20 | 21 | 22 | 23 | 24 | 25 |
|---|---|---|---|---|---|---|---|---|---|
| AFP-4 [g] | 5 | 5 | 5 | 5 | 5 | 5 | 5 | 5 | 5 |
| ISO-1 [g] | 5 | 2,5 | | 5 | 2,5 | | 5 | 2,5 | |
| ISO-2 [g] | 5 | 2,5 | 5 | | | | | | |
| ISO-3 [g] | | | | 5 | 2,5 | 5 | | | |
| ISO-4 [g] | | | | | | | 5 | 2,5 | 5 |
| Omnirad 1173 [g] | 0,15 | 0,15 | 0,15 | 0,15 | 0,15 | 0,15 | 0,15 | 0,15 | 0,15 |
| Desmorapid SO [g] | 0,075 | 0,0375 | 0,0375 | 0,075 | 0,0375 | 0,0375 | 0,075 | 0,0375 | 0,0375 |
| NCO-content | 14,29 | 10,67 | 11,53 | 14,12 | 10,55 | 11,29 | 13,73 | 10,26 | 10,7 |
| First $T_g$ [°C] | -45 | -27 | -45 | -44 | -40 | -42 | -45 | -42 | -33 |
| Second $T_g$ [°C] | 92 | 87 | 117 | 91 | 85 | 113 | 68 | 66 | 60 |
| E-Modulus [N/mm$^2$] | 303 | 28 | 23 | 368 | 39 | 33 | 437 | 136 | 43 |
| Tensile Strength [N/mm$^2$] | 25 | 11 | 7 | 28 | 13 | 4 | 22 | 16 | 16 |
| Elongation [%] | 40 | 39 | 26 | 52 | 47 | 15 | 65 | 74 | 55 |

Table 6

| # | 26 | 27 | 28 | 29 |
|---|---|---|---|---|
| AFP-1 [g] | 5 | | | |
| AFP-2 [g] | | 5 | | |

(continued)

| # | **26** | **27** | **28** | **29** |
|---|---|---|---|---|
| AFP-3 [g] | | | 5 | |
| AFP-4 [g] | | | | 5 |
| CTFA [g] | 3 | 3 | 3 | 3 |
| ISO-1 [g] | 10 | 10 | 10 | 10 |
| Omnirad 1173 [g] | 0,24 | 0,24 | 0,24 | 0,24 |
| Desmorapid SO [g] | 0,075 | 0,075 | 0,075 | 0,075 |
| NCO content [wt.-%] | 10,92 | 10,92 | 10,92 | 10,92 |
| First $T_g$ [°C] | -3 | 17 | 17 | -38 |
| Second $T_g$ [°C] | 61 | 60 | 57 | 63 |
| E-Modulus [N/mm$^2$] | 164 | 84 | 107 | 112 |
| Tensile Strength [N/mm$^2$] | 21 | 23 | 27 | 18 |
| Elongation [%] | 84 | 90 | 97 | 84 |

Table 7

| # | **Print 1** |
|---|---|
| AFP-4 [g] | 75 |
| ISO-1 [g] | 75 |
| Omnirad BL 750 [g] | 0,375 |
| Desmorapid SO [g] | 0,56 |
| 2,5-thiophenediylbis(5-tert-butyl-1,3-benzoxazole) [g] | 0,0375 |
| NCO-content [wt.-%] | 9,82 |
| **Printing Parameters** | |
| Layer Thickness [μm] | 100 |
| Bottom exposure [s] | 20 |
| Bottom layer [#] | 3 |
| Normal exposure [s] | 16 |
| First Tg [°C] | -38 |
| Second Tg [°C] | 40 |

## Claims

**1.** A resin comprising:

A) a (meth)acrylate-functional compound
B) a polyisocyanate
C) a radical starter and
D) a catalyst

**characterized in that**
the compound A) has an equivalent molecular weight with respect to (meth)acrylate C=C double bonds of ≥ 100 g/mol, the polyisocyanate B) has an average NCO group functionality of ≥ 2 and an equivalent molecular weight with respect to NCO groups of ≤ 300 g/mol,
the catalyst D) is an isocyanate trimerization catalyst and
that the resin is free from NCO-reactive compounds or, if NCO-reactive compounds are present in the resin, the molar ratio of NCO groups to NCO-reactive groups is ≥ 5:1.

**2.** The resin according to claim 1, wherein the compound A) is a (meth)acrylate functional polyurethane compound.

**3.** The resin according to claim 2, wherein the compound A) has a structure according to the general formula [ACRYL]-[ISO]-[POLYOL]-[ISO]-[ACRYL] with [POLYOL] being a radical of a difunctional polyol starting material, [ISO] being a radical of an aliphatic diisocyanate starting material and [ACRYL] being a radical of a hydroxyalkyl(meth)acrylate starting material.

**4.** The resin according to any one of claims 1 to 3, wherein the polyisocyanate B) comprises, in an amount of ≥ 30 weight-% based on the total weight of B), an allophanate, biuret, uretdione, isocyanurate, iminooxadiazinedione or a mixture of at least two of the aforementioned polyisocyanates.

**5.** The resin according to any one of claims 1 to 4, wherein the radical starter C) is present in an amount of ≤ 3 weight-%, based on the total weight of the acrylic phase and the catalyst D) is present in an amount of ≤ 1 weight-%, based on the weight of the polyisocyanate B).

**6.** The resin according to any one of claims 1 to 5, wherein the compound A) and the polyisocyanate B) are present in a weight ratio between 2:1 and 1:3, based on the total weight of A) and B).

**7.** The resin according to any one of claims 1 to 6, wherein the isocyanate trimerization catalyst comprises tin(II)ethylhexanoate.

**8.** A method of curing a resin, comprising:

I) providing a resin;
II) generating radicals from radical starters present in the resin, thereby obtaining a radically cured resin and
III) heating the radically cured resin of step II), thereby obtaining a thermally cured resin;

**characterized in that**
in step I) the resin is a resin according to any one of claims 1 to 7;
in step II) the radicals initiate a reaction between (meth)acrylate groups in the resin;
in step III) the radically cured resin is heated to a temperature of ≥ 50 °C, thereby initiating a trimerization reaction of isocyanate groups in the resin and
wherein steps II) and III) can take place simultaneously or subsequently.

**9.** The method according to claim 8, wherein in step I) the resin is provided as a coating on a substrate.

**10.** The method according to claim 8, wherein:

in step II) the resin is selectively irradiated according to a pre-determined cross-section of a target article to be manufactured and the selective irradiation is repeated until a pre-determined intermediate article comprising the photo-cured resin is obtained and
in step III) the intermediate article is heated to a temperature of ≥ 50 °C, thereby obtaining the target article.

**11.** The method according to claim 8, wherein:

prior to step II) the resin is selectively applied onto a surface according to a pre-determined cross-section of a target article to be manufactured and the selective application and irradiation according to step II) is repeated until a pre-determined intermediate article comprising the photo-cured resin is obtained and
in step III) the intermediate article is heated to a temperature of ≥ 50 °C, thereby obtaining the target article.

**12.** The method according to any one of claims 8 to 10, wherein step III) is performed at a temperature of ≥ 90 °C to ≤ 110 °C for a time of > 6 hours to ≤ 7 hours.

**13.** A photo-cured resin obtainable or obtained after step II) of a method according to any one of the claims 8 to 12.

**14.** A thermally cured resin obtainable or obtained after step III) of a method according to any one of the claims 8 to 12.

**15.** An article of manufacture comprising a photo-cured resin according to claim 13 and/or a thermally cured resin according to claim 14.

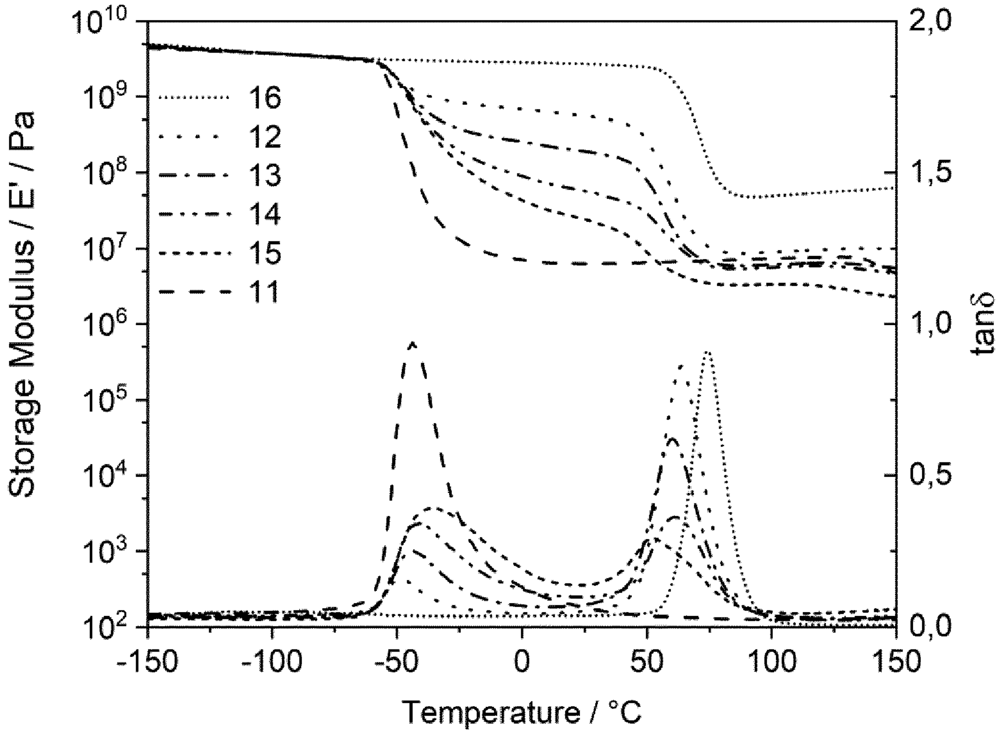
Storage Modulus / E' / Pa
tanδ
Temperature / °C
16
12
13
14
15
11
$10^{10}$
$10^9$
$10^8$
$10^7$
$10^6$
$10^5$
$10^4$
$10^3$
$10^2$
2,0
1,5
1,0
0,5
0,0
-150
-100
-50
0
50
100
150

FIG. 1

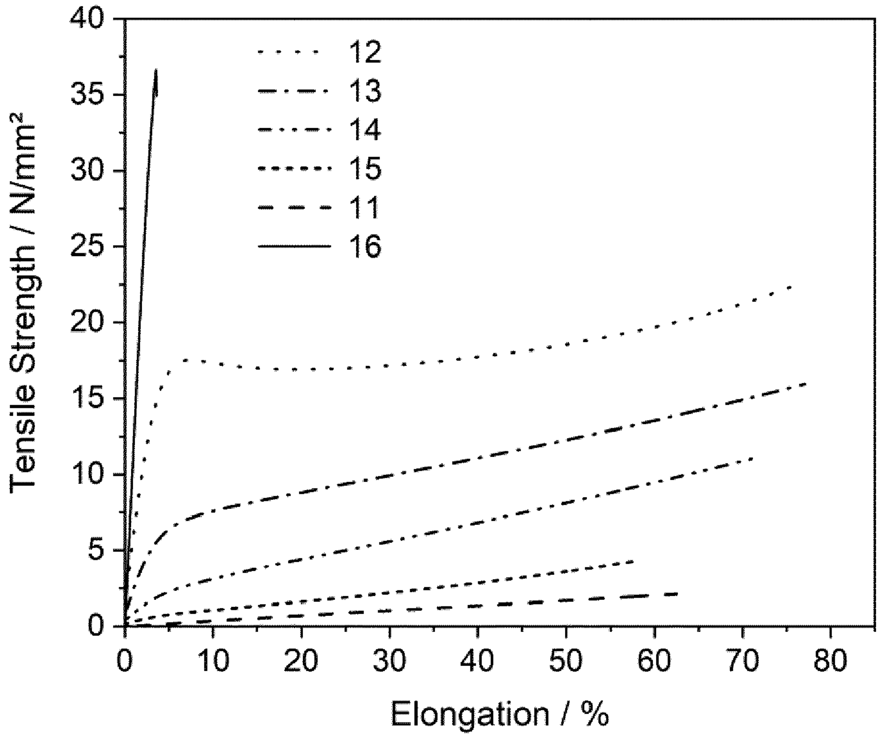

Tensile Strength / N/mm²
Elongation / %
0
5
10
15
20
25
30
35
40
0
10
20
30
40
50
60
70
80
12
13
14
15
11
16


FIG. 2

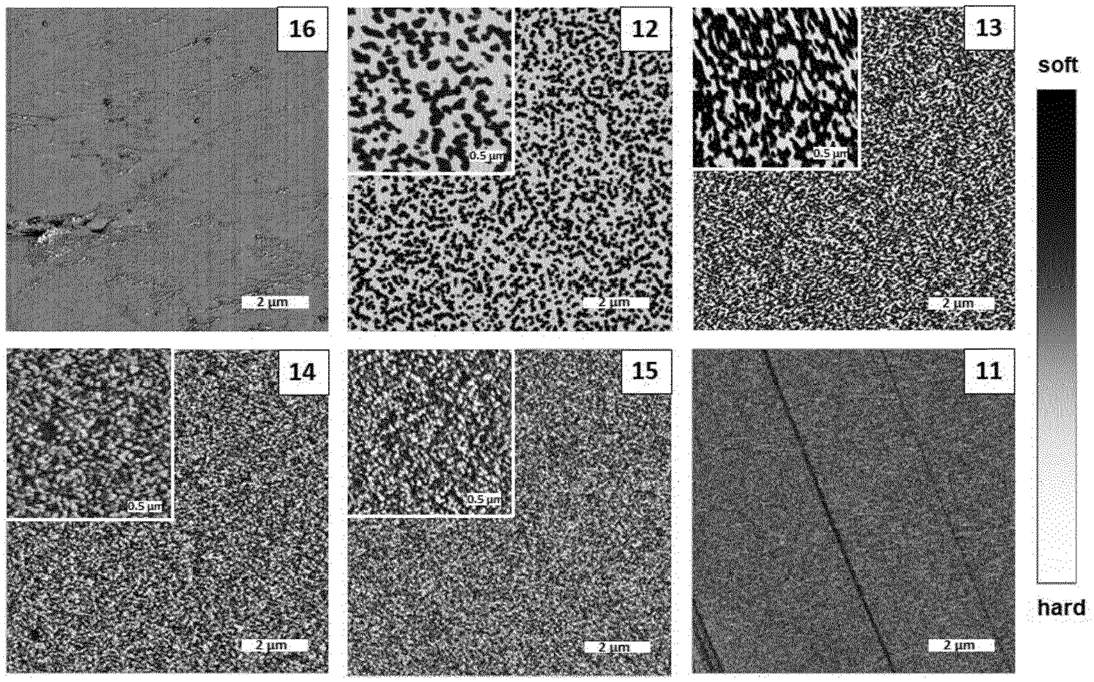


FIG. 3

Europäisches Patentamt
European Patent Office
Office européen des brevets

# EUROPEAN SEARCH REPORT

Application Number
EP 21 17 4109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/032392 A1 (MEISENHEIMER RICHARD [DE] ET AL) 4 February 2021 (2021-02-04) * Working Example 1 * ----- | 1-15 | INV. C08G18/44 B29C64/10 C08G18/48 C08G18/67 C08G18/73 C08G18/78 C08G18/79 |
| X,D | US 2018/133953 A1 (ACHTEN DIRK [DE] ET AL) 17 May 2018 (2018-05-17) * examples 1,2 * ----- | 1 | |

TECHNICAL FIELDS SEARCHED (IPC)

C08G
B29C

The present search report has been drawn up for all claims

| Place of search | Date of completion of the search | Examiner |
|---|---|---|
| Munich | 28 October 2021 | Bergmeier, Martin |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 17 4109

This annex lists the patent family members relating to the patent documents cited in the above-mentioned European search report. The members are as contained in the European Patent Office EDP file on
The European Patent Office is in no way liable for these particulars which are merely given for the purpose of information.

28-10-2021

| Patent document cited in search report | Publication date | Patent family member(s) | Publication date |
|---|---|---|---|
| US 2021032392 A1 | 04-02-2021 | EP 3743449 A1 | 02-12-2020 |
| | | US 2021032392 A1 | 04-02-2021 |
| | | WO 2019096813 A1 | 23-05-2019 |
| US 2018133953 A1 | 17-05-2018 | CN 109923142 A | 21-06-2019 |
| | | CN 109923143 A | 21-06-2019 |
| | | CN 109963890 A | 02-07-2019 |
| | | CN 110023368 A | 16-07-2019 |
| | | EP 3538583 A1 | 18-09-2019 |
| | | EP 3538584 A1 | 18-09-2019 |
| | | EP 3538585 A1 | 18-09-2019 |
| | | EP 3538586 A1 | 18-09-2019 |
| | | JP 2019535554 A | 12-12-2019 |
| | | KR 20190086447 A | 22-07-2019 |
| | | US 2018133953 A1 | 17-05-2018 |
| | | US 2019337224 A1 | 07-11-2019 |
| | | US 2019367665 A1 | 05-12-2019 |
| | | US 2019367666 A1 | 05-12-2019 |
| | | US 2020190245 A1 | 18-06-2020 |
| | | WO 2018087382 A1 | 17-05-2018 |
| | | WO 2018087395 A1 | 17-05-2018 |
| | | WO 2018087396 A1 | 17-05-2018 |
| | | WO 2018087399 A1 | 17-05-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2009062500 A1
- US 2018133953 A1
- WO 2018104223 A1
- US 20200140707 A1


### Non-patent literature cited in the description


- **DRIEST, P. J. ; DIJKSTRA, D. J. ; STAMATIALIS, D. ; GRIJPMA, D. W.** The Trimerization of Isocyanate-Functionalized Compounds: An Effective Method for Synthesizing Well-Defined Polymer Networks. *Macromolecular Rapid Communications,* 2019, vol. 40 (9), 1800867